# EUROPÄISCHE PATENTSCHRIFT

(11) **EP 1 289 217 B1**
(45) Veröffentlichungstag und Bekanntmachung des Hinweises auf die Patenterteilung: **29.08.2007**
(21) Anmeldenummer: 01120385.8
(22) Anmeldetag: 27.08.2001
(51) Int. Cl.: H04L 27/24

(54) **Kommunikation mittels Wechselstromhalbwellen**
Communication using alternative current half-waves
Communication utilisant des demi-ondes à courant alternatif

(43) Veröffentlichungstag der Anmeldung: 05.03.2003
(73) Patentinhaber: Feller AG, 8810 Horgen (CH)
(72) Erfinder: Wagner, Matthias, 8134 Adliswil (CH)
(74) Vertreter: Blum, Rudolf Emil

(56) Entgegenhaltungen:
- DE-A- 2 835 549
- JP-A- 63 306 346
- US-A- 4 990 908
- US-A- 5 055 746
- US-A- 6 097 761

## Beschreibung

Die Erfindung betrifft ein Verfahren gemäss Anspruch 1, eine Sende- und Empfangsanlage gemäss Anspruch 5 sowie Sender und Empfänger dazu und deren Verwendung sowie ein Gebäude mit einer entsprechend ausgerüsteten Hausinstallation.

Aus DE-C-3010938 ist es bekannt, Halbwellen eines Wechselstromes als ununterbrochene Abfolge von positiven und negativen Halbwellen zum Senden eines Binärcodes zu verwenden, wobei die Unterscheidung der Binärwerte 1 bzw. 0 durch Absenkung der Amplitude einer Halbwelle oder Unterdrückung derselben gebildet wird. Auf diese Weise werden gemäss dieser Schrift z.B. bei einer Frequenz der Wechselspannung von 2500 Hz 5000 bit/sec übertragen. Auch CH-A-684860 lehrt die Verwendung von sowohl positiven wie negativen Halbwellen für die Übertragung binär codierter Daten. Die Sender und Empfänger für solche Anlagen müssen positive und negative Halbwellen und Nullspannung unterscheiden und als Binärwerte interpretieren können, was relativ aufwendige Schaltungen benötigt. US-A-6 097 761 zeigt die Datenübertragung mit den negativen Halbwellen einer Wechselspannung und die Speisung von Geräten mit den positiven Halbwellen dieser Wechselspannung. US-A-5 055 746 und US-A- 4 990 908 zeigen Beleuchtungssteuerungen bzw. das Dimmen von Lampen, wobei nicht mit binär codierten Daten gearbeitet wird, sondern direkt Halbwellen der Speisespannung von Verbrauchern beeinflusst bzw. ausgewertet werden.

Insbesondere für elektrische Gebäudeinstallationen aber auch für andere Anwendungen besteht ein Bedürfnis nach einer besonders einfachen Kommunikationsmöglichkeit zwischen Geräten, bzw. zwischen Sendern und Empfängern. Bei Gebäudeinstallationen sollen z.B. auf einfache Weise über Bedienungsapparate (Taster) Funktionen bei Nebenstellen mit Empfängern gesteuert werden, z.B. das Hoch- bzw. Abwärtsfahren von Storen. Nach Stand der Technik kann dies mittels der Installationsspannung erfolgen, indem die Nebenstellen (Empfänger) die Signale der Taster (Sender) entsprechend der Zeitdauer der Betätigung des Tasters bzw. des Anliegens der Spannung bei der Nebenstelle (z.B. kürzer als 500 ms oder länger als 500 ms) interpretieren und darauf reagieren. Um mehr Befehle übertragen zu können werden auch verschieden hohe Spannungen eingesetzt. Die Interpretation nach Zeitdauer ermöglicht in der Regel nur zwei Befehle, der Einsatz verschiedener Spannungspegel, der mehr Befehlsvarianten ermöglicht, führt wiederum zu entsprechend aufwendigen Geräten (Sendern, Empfängern).

Eine weitere Art der Kommunikation in der Haustechnik arbeitet derart, dass die zu übertragende Information der Netzspannung aufmoduliert wird. Ferner sind verschiedenste Bus-Systeme bekannt, welche zur Informationsübertragung Niederspannungsleitungen verwenden und durch die Adressierbarkeit der Hausinstallationsgeräte eine hohe Flexibilität bei hohem Aufwand aufweisen.

Der vorliegenden Erfindung liegt die Aufgabe zugrunde, eine sichere Kommunikation zwischen Geräten bei möglichst geringem Aufwand zu schaffen; die Kommunikation soll dabei in der Hausinstallationstechnik erfolgen.

Die Aufgabe wird bei einem Verfahren der eingangs genannten Art mit den Merkmalen des Anspruchs 1 gelöst.

Dadurch, dass nur eine Art von Halbwellen, positive oder negative, nicht aber beide, der Hausinstallationswechselspannung zur Codierung verwendet werden und ein Binärwert durch Vorhandensein dieser Halbwelle und der andere Binärwert durch Nichtvorhandensein der Halbwelle dargestellt wird, ergibt sich ein besonders einfaches Verfahren bzw. ergeben sich sehr einfach aufgebaute Sender und Empfänger bei hoher Übertragungssicherheit, bei allerdings nicht optimaler Übertragungsgeschwindigkeit, was indes für die Verwendung in der Hausinstallationstechnik ohne weiteres in Kauf genommen werden kann. Vorgesehen ist die Verwendung einer Wechselspannung, insbesondere der Netzspannung des Hausinstallationsnetzes, als Wechselspannung für die Kommunikation und die Verwendung nur eines zusätzlichen Installationsdrahtes für die Kommunikation der Geräte. Der Rückstrom kann über den Neutral-Leiter des Netzes fliessen.

Bevorzugterweise erfolgt die Kommunikation der Geräte über definierte Telegramme aus Datenbits. Sind die Geräte weiter so ausgestaltet, dass sie auch in herkömmlicher Weise die Länge von Halbwellenfolgen detektieren können, so können auch herkömmliche Geräte (z.B. Taster, Wettersensoren) in das erfindungsgemässe Verfahren eingebunden werden.

Der Erfindung liegt weiter die Aufgabe zugrunde eine besonders einfache Sende-Empfangsanlage zu schaffen, welche durch ihre Einfachheit für die elektrische Hausinstallation geeignet ist.

Diese Aufgabe wird durch eine Sende- und Empfangsanlage mit den Merkmalen des Anspruchs 5 gelöst.

Auch bei der Sende- und Empfangsanlage ergibt sich durch die Verwendung ausschliesslich positiver oder ausschliesslich negativer Halbwellen der Hausinstallationswechselspannung und deren Durchschaltung für den einen und deren Sperrung für den anderen Binärwert ein besonders einfacher Aufbau sowohl des Senders wie des Empfängers.

Die Ausgestaltung der Sender bzw. Empfänger zur Abgabe bzw. zum Empfang von Netzwechselspannungshalbwellen erlaubt die Übermittlung der Halbwellen über den zusätzlichen Leitungsdraht zu den ohnehin vorhandenen Leitungsdrähten (Phase, Neutral-Leiter, Schutzleiter) der Hausinstallation. Bevorzugt ist die Verwendung einer einadrigen Leitung. Ebenfalls bevorzugt ist die zusätzliche Ausgestaltung der Empfänger zur Unterscheidung von uncodierten Halbwellenfolgen aufgrund verschiedener Längen derselben, was den Einsatz herkömmlicher Geräte (Ta ster, Sensoren) in der nach der Erfindung arbeitenden Sende- und Empfangsanlage ermöglicht.

Die vorliegende Erfindung unterscheidet sich von genannten Stand der Technik dadurch, dass ein Binärcodeelement durch genau eine Halbwelle der Hausinstallationswechselspannung dargestellt wird, und dass das Prinzip der Halbwellencodierung in Zusammenhang mit den Anwendungsgebiet Hausinstallation Vorteile bietet, welche es erlauben, Hausinstallationsgeräte in Installationen über das Konzept von Nebenstellen derart zu vernetzen, dass auf einfachste und für den Installateur sehr verständliche Weise Mehrfunktionalität realisiert werden kann. So wird bevorzugt nur ein Kommunikationsdraht verwendet, da der Rückstrom über den für die Speisung der Geräte notwendigen Neutral-Leiter erfolgt. Die Kommunikation erreicht durch die Amplitude der Netzspannung und das lange Anliegen, und somit durch die lange Auswertzeit der Signale (Halbwellenlänge), eine sehr grosse Übertragungssicherheit. Im weiteren muss für die Installation nicht von gewohnten und bekannten Verdrahtungs-Strukturen abgewichen werden. Die Drähte welche die Nebenstellen verbinden, führen die gleiche Spannung, können den gleichen Querschnitt aufweisen und in den gleichen Verbindungskanälen verlegt werden. Ein derartiges System, dessen Struktur zwar durch die Verdrahtung fest vorgegeben ist, benötigt weder spezielle Speisungsgeräte und Netzfilter, noch ist es auf ein anderes Medium (beispielsweise Funk) für die Übertragung angewiesen. Die Reduktion auf lediglich positive oder negative Halbwellen hat den wesentlichen Vorteil der Vereinfachung des elektronischen Aufbaus der Kommunikationseinrichtung. Es muss lediglich zwischen 0 und 1 und nicht zwischen -1, 0 und 1 unterschieden werden.

Im folgenden werden Ausführungsbeispiele der Erfindung anhand der Zeichnungen näher erläutert. Dabei zeigt
Figur 1 eine einfache Verdrahtungsstruktur zur Erläuterung der Erfindung anhand einer Hausinstallation;
Figur 2 schematisch ein Beispiel für die Codierung gemäss der Erfindung mit positiven Halbwellen;
Figur 3 ein Beispiel für eine bevorzugte Telegrammstruktur;
Figur 4 eine Darstellung einer Halbwelle; und
Figur 5 grob schematisch die Darstellung eines Senders und eines Empfängers sowie eines konventionellen Tasters.

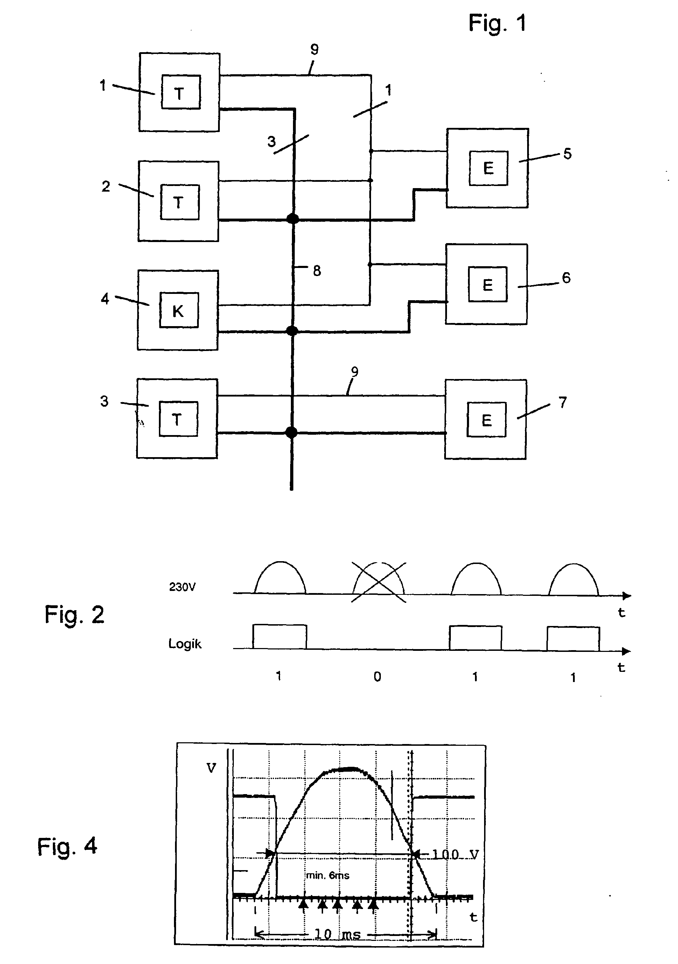

Figur 1 zeigt grob schematisch einen Teil einer Verdrahtungsstruktur einer elektrischen Gebäudeinstallation. Dabei sind mit 1, 2 und 3 Bedienungsgeräte in der Form von Tastern gezeigt, mittels welchen gemäss der Erfindung Steuersignale abgebbar sind. Mit 4 ist ein konventionelles Bedienungsgerät, ebenfalls als Taster gezeigt, durch welches auf herkömmliche Art und Weise Steuersignale abgebbar sind. Mit 5, 6 und 7 sind Empfänger dargestellt, welche die Steuerbefehle empfangen und einen Verbraucher schalten, z.B. einen elektrischen Motor für Storen, einen Dimmer für Lampen, einen Motor einer Lüftung usw. Die Verdrahtung der Hausinstallation ist dabei schematisch durch Leitungen 8 und 9 dargestellt, wobei die Leitungen 8 die üblichen dreiadrigen Leitungen für die Netzwechselspannung im Gebäude sind (Neutral-Leiter, Phase und Schutzleiter, wobei der Schutzleiter von den Geräten nicht benötigt wird) und 9 die bevorzugterweise einadrige Leitung zur Übermittlung der Steuersignale zwischen den Geräten darstellt.

Figur 2 zeigt schematisch, wie die binärcodierte Information bzw. Steuersignale und allfällige Quittierungssignale gemäss der Erfindung verbreitet werden. Es werden zur Darstellung der Informationsbits im gezeigten Beispiel von Figur 2 nur die positiven Halbwellen einer Wechselspannung, bevorzugterweise gerade eben der Installationswechselspannung verwendet. Bevorzugterweise ist dies die 230V/50Hz-Netzwechselspannung. Dabei kann die Zuordnung so erfolgen, dass einer positiven Halbwelle der Binärwert 1 und dem Fehlen einer positiven Halbwelle der Binärwert 0 zugeordnet wird. Im Gegensatz zum Stand der Technik werden bei der vorliegenden Erfindung die Halbwellen mit umgekehrtem Vorzeichen nicht verwendet. In der Figur ist gezeigt, wie jeweils im Zeitablauf eine positive Halbwelle auftritt, welche für eine logische 1 steht, oder eine positive Halbwelle ausfällt, was im oberen Teil der Figur durch die durchgestrichene Halbwelle dargestellt ist, die für eine logische 0 steht. Die Übermittlung erfolgt somit dadurch, dass Halbwellen durchgeschaltet werden, wenn eine logische 1 übermittelt werden soll und Halbwellen der gleichen Art gesperrt werden, wenn eine logische 0 übermittelt werden soll. Die Zuordnung der logischen Werte zum Durchschalten bzw. Sperren der Halbwellen könnte natürlich auch umgekehrt sein. In der Figur 2 sind die negativen Halbwellen nicht dargestellt, diese könnten auch auf der Signalleitung vorhanden sein, sofern nur Geräte in der Installation vorhanden sind, die mittels der codierten Binärsignale arbeiten, dienen aber nicht zur Informationsübermittlung und müssen daher nicht ausgewertet werden. Anstelle der Übermittlung mittels der positiven Halbwellen, wie in Figur 2 gezeigt könnten natürlich auch ausschliesslich die negativen Halbwellen verwendet werden. Ferner ist es möglich, durch eine Gleichrichtung nur positive Halbwellen zu erzeugen, und diese vollständig zur Signalübermittlung zu verwenden, so dass entgegen Figur 2 keine Lücken bzw. Bitpausen zwischen den einzelnen Halbwellen bzw. Informationsbits entstehen. Für die bevorzugte Anwendung als Kommunikationsverfahren bei Gebäudeinstallationen genügt indes die Übertragungsgeschwindigkeit, wie sie gemäss dem Beispiel von Figur 2 erzielbar ist. Bevorzugterweise wird für die Kommunikation der Geräte nur eine zusätzliche einadrige Leitung 9 verwendet, welche als Signalwechselspannung die 230 Volt der Installationswechselspannung und für die Rückströme den Neutral-Leiter der dreiadrigen Leitung 8 verwendet. Geräte, die zusammen funktionieren sollen, werden somit über eine einzige eindrahtige Leitung, z.B. einen installationsüblichen Kupferdraht von 1,5 mm² Querschnitt, zur Kommunikation miteinander verbunden.

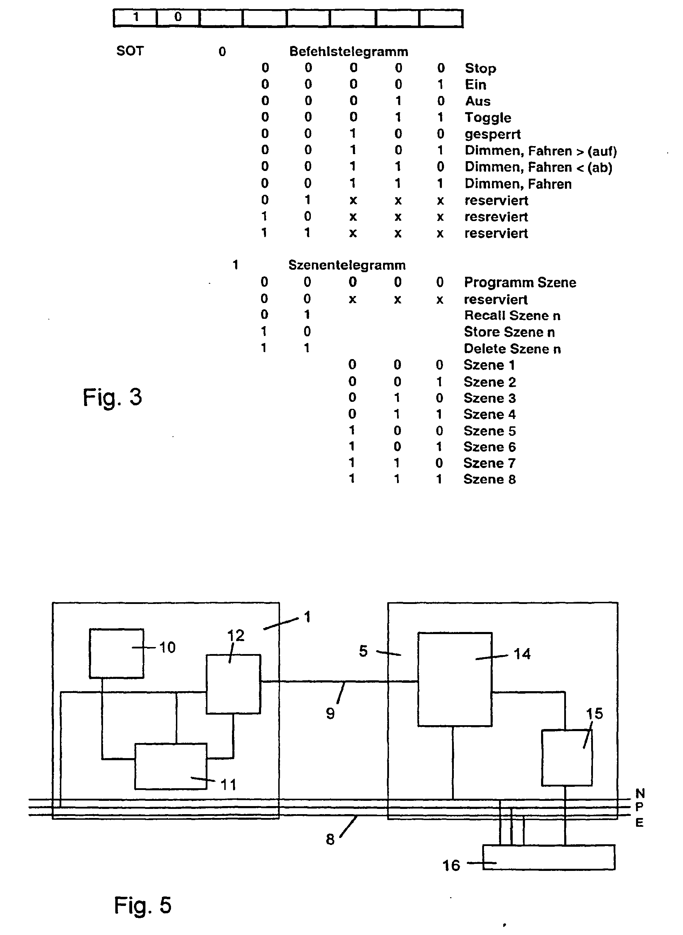

Die sendenden Geräte 1, 2 und 3, welche gemäss der Erfindung binär codierte Informationen bzw. Steuerbefehle senden, können dies grundsätzlich in einem beliebigen von den empfangenden Geräten auswertbaren Format tun. Als Beispiel erfolgt die Informationssendung über die Leitung 9 in der Form von Telegrammen, welche jeweils aus einem Byte bestehen. Figur 3 zeigt beispielhaft die Codierung eines solchen Telegrammes, wobei die beiden anfänglichen Bit 1 und 0 den Start des Telegramms (SOT) darstellen. Jedes Telegramm wird mit einer solchen 1-0-Sequenz eingeleitet und unterscheidet sich dadurch von Signalen von konventionellen Tastern. Das dritte Bit des Telegramms ist 0 für Befehlstelegramme bzw. 1 für Szenentelegramme. Unter Szene wird dabei bei der Gebäudeinstallation eine vorgegebene Kombination aus Beleuchtung und Storenstellung bezeichnet. Zum Beispiel kann in einem Vortragssaal die Szene 1 hochgefahrene Storen und eine bestimmte Beleuchtung bedeuten, die dem Vortragenden Erläuterungen an einer Wandtafel oder mittels eines Hellraumprojektors erlaubt. Die Szene 2 hingegen kann z.B. eine stark heruntergedimmte Beleuchtung und geschlossene Storen bedeuten, wie dies für das Zeigen von Dias oder Filmen geeignet ist. Die weiteren Bits eines Befehlstelegramms oder eines Szenentelegramms sind in der Figur dargestellt, wobei die jeweilige Funktion Ein-, Aus- oder Hin- und Herschalten (Toggle), Dimmen oder Fahren (von Storen) angegeben ist. Natürlich ist diese Codierung nur als Beispiel anzusehen und könnte auch in anderer Form erfolgen.

Die Geräte 1, 2 und 3 (Figur 1) können in der Form von Tastern (mit einem Betätigungsteil) zwei verschiedene Telegramme absenden, welche aufgrund der verschieden langen Betätigungszeit des Tasters abgegeben werden. Ein kurzer Tastendruck von kürzer als z.B. 500 Millisekunden erzeugt eines der Telegramme nach Loslassen der Taste. Wird die Taste länger gedrückt, also länger als 500 Millisekunden, so wird das entsprechende andere Telegramm nach Verstreichen der 500 Millisekunden ausgelöst. Nach dem Loslassen der Taste nach einem langen Tastendruck wird zusätzlich der Stop-Befehl gesendet. Die gezeigten Taster 1, 2 und 3 können also jeweils drei Telegramme abgeben, das dem kurzen Tastendruck entsprechende Telegramm, z.B. ein Befehlstelegramm für "Ein", ein dem langen Tastendruck entsprechendes Befehlstelegramm, also z.B. das Befehlstelegramm für "Aus", sowie das "Stop"-Befehlstelegramm nach langem Tastendruck. Beim jeweiligen empfangenden Gerät 5, 6 und 7 wird das entsprechende Befehlstelegramm ausgewertet und der am empfangenden Gerät angeschlossene Verbraucher, also z.B. ein Motor, eine Lampe oder ein anderer Verbraucher entsprechend betätigt.

Bei den Geräten, die Telegramme für Szenen abgeben, sind vorzugsweise Tastaturfelder angeordnet, so dass aus der Mehrzahl von Szenen durch entsprechende Tastaturbetätigung die gewünschte Szene ausgewählt werden kann und das entsprechende Szenentelegramm abgegeben wird.

Die jeweiligen sendenden Geräte 1, 2 und 3 können ihnen zugeordnete fest einprogrammierte Befehlstelegramme, also z.B. die Telegramme für "Ein" bzw. "Aus" und "Stop" enthalten, so dass für die Befehlsabgabe der entsprechenden Funktion in der Hausinstallation der entsprechende Taster installiert werden muss. Die Taster können aber natürlich auch so programmierbar sein, z.B. durch einstellbare Schalter, dass bei einem universell ausgestalteten Taster die entsprechenden gewünschten Telegramme gewählt werden können. Vorzugsweise wird das Verfahren und die Hausinstallation so ausgeführt, dass zusätzlich konventionelle Befehlsgeräte bzw. Taster 4 verwendet werden können, welche bei Tastenbetätigung ein normales, nicht codiertes Wechselspannungssignal (also mit positiven und negativen Halbwellen) auf die Leitung 9 abgeben. Dieses Signal kann von den empfangenden Geräten 5 und 6 auf herkömmliche Weise nach seiner Betätigungslänge interpretiert werden. Das Tastatursignal wird dabei auf bekannte Art und Weise entprellt und wird vorzugsweise ebenfalls als 230V-Wechselspannungssignal, allerdings mit sich abfolgenden positiven und negativen Halbwellen auf die Leitung 9 gegeben. Die empfangenden Geräte erkennen dabei durch das Fehlen der 1-0-Sequenz (SOT) dass es sich nicht um ein Telegramm, sondern um eine konventionelle Befehlsübermittlung durch ein Wechselspannungssignal handelt.

Wie beschrieben, wird keine Adressierung der empfangenden Geräte durchgeführt, sondern die Adressierung ergibt sich durch die Verdrahtung der Hausinstallation. So empfangen im Beispiel von Figur 1 die Geräte 5 und 6 die Befehle der Taster 1 und 2 und des konventionellen Tasters 4. Das Gerät 7 empfängt nur die Befehle des Tasters 3. Durch diese bevorzugte einfache adressierungslose Befehlsstruktur, die sich durch die Verkabelung ergibt, wird die Installation besonders einfach. Durch die definierte Länge der Telegramme kann auf ein spezielles Telegramm zur Beendigung der Telegrammübermittlung (End of Telegram; EOT) verzichtet werden. Die langsame Datenübertragung mit den Halbwellen hoher Spannung ergibt eine hohe Zuverlässigkeit der Übertragung. Figur 4 zeigt dabei eine Halbwelle eines 230V-Netzspannungssignals. Die Halbwelle kann dabei als logisch 1 interpretiert werden, wenn das Signal mindestens während 6 Millisekunden anliegt. Die elektronische Schaltung des empfangenden Gerätes frägt die Spannung mehrmals ab, z.B. fünf Mal, wie in der Figur mit den Pfeilen angedeutet ist, und interpretiert das Signal als Halbwelle, wenn während 4 der 5 Abfragezeiten der Elektronik das Signal z.B. den Wert von 100Volt überschreitet. Dadurch wird sichergestellt, dass eingekoppelte Störungen nicht als Betätigung interpretiert werden. Für die Signale der konventionellen Taster kann das 230V-Signal als solches erkannt werden, wenn es während mindestens 60 Millisekunden anliegt, was drei Halbwellen entspricht. Ein langes bzw. kurzes konventionelles Signal wird durch die Länge der Tastenbetätigung (z.B. länger als 500 ms und kürzer als 500 ms) unterschieden.

Die empfangenden Geräte 5, 6 und 7 können ebenfalls sendende Geräte sein, indem sie ihren Zustand an die anderen Geräte abgeben. Dies ist insbesondere dann sinnvoll, wenn sich konventionelle Befehlsgeräte, z.B. der Taster 4, in der Installation befinden. Mit einem über das Telegramm übermittelten Ein- bzw. Aus-Befehl wird ohnehin gleichzeitig der Zustand mitgeliefert, welchen das empfangende Gerät nach der Auswertung annehmen wird. In diesem Fall ist eine Rückmeldung nicht notwendig. Bei einem normalen, uncodierten 230V-Signal fehlt indes diese Information. Aus diesem Grunde ist es bevorzugt, wenn die Geräte so realisiert sind, dass nach dem Empfang eines 230V-Signals der anzunehmende oder angenommene Zustand des Empfangsgerätes auf die Leitung 9 übertragen wird. Dadurch kann sichergestellt werden, dass die beteiligten sendenden Geräte den richtigen Zustand des empfangenden Gerätes erhalten und allenfalls anzeigen und/oder weiterverarbeiten können.

Figur 5 zeigt grob schematisch den Aufbau eines sendenden Tasters 1 und eines empfangendes Gerätes 5. Nicht berücksichtigt ist dabei, dass auch das empfangende Gerät zum Senden einer Rückmeldung ausgestaltet sein kann und ferner nicht berücksichtigt ist, dass das sendende Gerät auch zum Empfang ausgestaltet sein kann, so zum Empfang der genannten Rückmeldung oder auch der eigenen Meldung zur Feststellung von Befehlskollisionen, was nachfolgend noch erläutert wird. Das sendende Gerät 1 enthält den eigentlichen Taster 10, welcher von einer Bedienungsperson betätigt werden kann. Der Taster 10 löst die betätigungszeitabhängige Aussendung unterschiedlicher Telegramme aus, welche in einer Schaltung 11 programmiert oder programmierbar abgelegt sind. Die Schaltung 11 ihrerseits steuert einen elektronischen Schalter 12 an, der die Phasenspannung von der Leitung 8 selektiv gesteuert auf die Leitung 9 gibt, so dass jeweils das entsprechende Telegramm ausgesendet wird. Die Schaltung 11 empfängt dabei ebenfalls die Phasenspannung, um deren jeweiligen Null-Durchgang festzustellen, um die Telegrammcodierung entsprechend den Halbwellen der Wechselspannung durchzuführen. Im Empfänger 5 ist ein Detektor 14 vorgesehen, welcher die Wechselspannung auf der Leitung 9 entsprechend Figur 4 abfragt und feststellt, ob ein Telegramm vorliegt oder eine kontinuierliche Halbwellenfolge von einem konventionellen Taster 4, und welche im Falle eines Telegrammes die Decodierung des Telegrammes vornimmt und im Falle eines konventionellen Signales die Decodierung aufgrund der Signallänge vornimmt. Die Decodierschaltung 14 steuert entsprechend einen elektronischen Schalter 15, der wiederum den eigentlichen Verbraucher 16, also einen Motor oder eine Lampe oder einen sonstigen elektrischen Verbraucher betätigt.

Es kann vorkommen, dass zwei Geräte gleichzeitig Informationen (Befehle, Rückmeldungen) übermitteln wollen. Diesen Zustand gilt es zu vermeiden, weil dadurch die Daten falsch interpretiert werden können.

Durch die Möglichkeit, an den gleichen Informationsleitungen konventionelle Geräte 4 wie auch elektronische Geräte 1, 2, 3 anzuschliessen, müssen drei Fälle unterschieden werden, nämlich Kollision zwischen: 1. elektronischem Gerät und elektronischem Gerät, 2. elektronischem Gerät und konventionellem Gerät und 3. konventionellem Gerät und konventionellem Gerät.

Die Kollisionen können dabei wie folgt behandelt werden: Elektronische Geräte empfangen gesendete Daten direkt wieder. Wird ein Bit erkannt, dass nicht gesendet wurde, wird daraus auf die Detektion eines anderen Telegramms geschlossen. Das Gerät, welches als erstes ungleiches Bit eine Eins sendet hat Priorität und darf das Telegramm weiter senden. Das Gerät mit einer Null zieht sich zurück, wertet das erhaltene Telegramm aus und sendet anschliessend das eigene Telegramm nochmals. Es kann davon ausgegangen werden, dass ein anderes Gerät bis zur Detektion die gleiche Bitsequenz gesendet hat. Die Geräte anerkennen eine Priorität, d.h. alle beteiligten Geräte schalten nach dem SOT auf Empfang und verunmöglichen dadurch das eigene Senden. Mit konventionellen Geräten kann dies jedoch nicht realisiert werden. Ein solches Signal überdeckt die Datensequenz, wenn das Telegramm gleichzeitig gesendet wird und wird dadurch als konventionelle Betätigung interpretiert. Dadurch werden die Signale der konventionellen Sensoren systembedingt priorisiert.

Tritt ein konventionelles Signal auf, wird es normal ausgewertet und verarbeitet. Andere Beteiligte welche Daten versenden wollen, müssen warten.

Werden zwei konventionelle Sensoren gleichzeitig auf der Datenleitung aktiv, so wird dies wie das Signal von einem (unter der Berücksichtigung der entsprechenden Entprellzeiten) interpretiert und verarbeitet.

## Patentansprüche

1. Verfahren zur Übertragung codierter Daten zwischen mindestens zwei Hausinstallationsgeräten (1-7) über ein diese verbindendes Kommunikationsmittel (9), wobei die Daten als Halbwellen einer Wechselspannung dargestellt werden, wobei das Kommunikationsmittel (9) eine Drahtverbindung ist, die zusätzlich zu der Verdrahtung der Hausinstallation mit Neutralleiter, Phasenleiter und Schutzleiter vorgesehen ist, wobei, zur binären Codierung der Daten ausschliesslich entweder positive oder negative Halbwellen gebraucht werden und der eine Binärwert jeweils durch Durchschalten der Halbwelle und der andere Binärwert jeweils durch Sperren der Halbwelle übermittelt wird, und dass mindestens ein Teil der Geräte (4-7) ferner zum Senden und Empfangen von uncodierten Halbwellenfolgen ausgestaltet ist, und dass diese Hälbwellenfolgen im empfangenden Gerät aufgrund ihrer Dauer unterschieden werden.

2. Verfahren nach Anspruch 1, **dadurch gekennzeichnet, dass** die Drahtverbindung eine einadrige Drahtverbindung ist.

3. Verfahren nach einem der Ansprüche 1 oder 2, **dadurch gekennzeichnet, dass** die Geräte (1-7) zum Senden und Empfangen von zu Datentelegrammen zusammengefassten Datenbitfolgen ausgestaltet sind.

4. Sende- und Empfangsanlage mit einer Hausinstallation mit mindestens einem von einem Hausinstallationsgerät gebildeten Sender (1-4) und mindestens einem von einem Hausinstallationsgerät gebildeten Empfänger (5-7) und einem diese verbindenden Kommunikationsmittel (9), wobei der Sender zum Senden codierter Daten ausgestaltet ist, bei denen die Daten von Halbwellen einer Wechselspannung gebildet sind, und der Empfänger zum Empfang und zur Decodierung derart codierter Daten ausgestaltet ist, wobei Sender und Empfänger zur Abgabe bzw. zum Empfang von Spannungshalbwellen, ausgestaltet sind, wobei das Kommunikationsmittel ein Installationsdraht zusätzlich zur Verdrahtung der Hausinstallation mit Neutralleiter, Phasenleiter und Schutzleiter ist, wobei, zur binären Codierung der Daten ausschliesslich entweder positive oder negative Halbwellen der Wechselspannung gebraucht werden und der Sender zur Abgabe einer solchen Halbwelle für den einen Binärwert bzw. zur Unterdrückung einer solchen Halbwelle für den anderen Binärwert ausgestaltet ist und dass der Sender zusätzlich zum Aussenden uncodierter Halbwellenfolgen verschiedener zeitlicher Dauer und der Empfänger zur Unterscheidung der Zeitdauer solcher Folgen ausgestaltet ist.

5. Sende- und Empfangsanlage nach Anspruch 4, **dadurch gekennzeichnet, dass** der Installationsdraht eine einadrige Leitung (9) bildet.

6. Sender, der als Hausinstallationsgerät ausgestaltet ist, für eine Sende- und Empfangsanlage nach Anspruch 4 oder 5, wobei der Sender zum Anschluss mindestens von Neutralleiter und Phasenleiter der Verdrahtung der Hausinstallation umfassend Neutralleiter, Phasenleiter und Schutzleiter und zum Anschluss der zusätzlichen Drahtverbindung ausgestaltet ist und ferner zur Abgabe von Wechselspannung, an die Drahtverbindung ausgestaltet ist, wobei zur binären Codierung der Daten ausschliesslich entweder positive oder negative Halbwellen der Wechselspannung gebraucht werden und der Sender zur Abgabe einer solchen Halbwelle für den einen Binärwert bzw. zur Unterdrückung einer solchen Halbwelle für den anderen Binärwert zusätzlich zum Aussenden uncodierter Halbwellenfolgen verschiedener zeitlicher Dauer ausgestaltet ist.

7. Empfänger, der als Hausinstallationsgerät ausgestaltet ist, für eine Sende- und Empfangsanlage nach Anspruch 4 oder 5, wobei der Empfänger zum Anschluss mindestens von Neutralleiter und Phasenleiter der Verdrahtung der Hausinstallation umfassend Neutralleiter, Phasenleiter und Schutzleiter und zum Anschluss der zusätzlichen Drahtverbindung ausgestaltet ist und ferner zum Empfang von Wechselspannung, von der Drahtverbindung, wobei, der Empfänger zum Empfang von Binärwerten 1 bzw 0 von Datenbits ausgestaltet ist, wobei zur binären Codierung der Daten ausschliesslich entweder positive oder negative Halbwellen der Wechselspannung gebraucht werden, die Binärwerten unter Abgabe einer solchen Halbwelle für den einen Binärwert bzw. unter Unterdrükkung einer solchen Halbwelle für den anderen Binärwert abgegeben worden sind und dass der Empfänger zusätzlich zur Unterscheidung der Zeitdauer von uncodierten, vom Sender ausgesandten Halbwellenfolgen ausgestaltet ist.

8. Verwendung von Sendern bzw. Empfängern nach Anspruch 6 bzw. 7 in einer elektrischen Hausinstallation.

9. Elektrische Hausinstallation für Gebäude mit Sendern und Empfängern nach Anspruch 6 bzw. Anspruch 7.

10. Gebäude mit einer elektrischen Hausinstallation nach Anspruch 9.

## Claims

1. Method for transmitting coded data between at least two house installation devices (1-7) via these connecting communication means (9), said data being represented by half-waves of an alternating voltage, said communication means (9) being a wire connection, which is provided in addition to the wiring of the house installation with a neutral conductor, a phase conductor and a protective conductor, wherein for binary coding of the data exclusively either positive or negative half-waves are used and the one binary value is transmitted in each case by putting through the half-wave and the other binary value is transmitted in each case by blocking the half-wave, and wherein further at least a part of the devices (4-7) is formed for sending and receiving uncoded half-wave sequences, and wherein these half-wave sequences are differentiated within the receiving device due to their length.

2. Method according to claim 1, wherein the wire connection is a single-wire wire connection.

3. Method according to claim 1 or 2, wherein the devices (1-7) are formed for sending and receiving data bit sequences which are combined in data telegrams.

4. Sending and receiving facility with a house installation with at least one sender (1-4) that is formed by a house installation device and at least one receiver (5-7) that is formed by house installation device and these connecting communication means (9), said sender being formed for sending coded data, said data being formed by half-waves of an alternating voltage, and said receiver being formed for receiving and for decoding such coded data, said sender and said receiver being formed for emitting and receiving, respectively, voltage half-waves, said communication means being an installation wire in addition to the wiring of the house installation with a neutral conductor, a phase conductor and a protective conductor, wherein for binary coding of the data exclusively either positive or negative half-waves of the alternating voltage are used and the sender is formed for emitting such a half-wave for the one binary value and for suppressing such a half-wave for the other binary value, respectively, and wherein the sender further is formed for emitting uncoded half-wave sequences of different time length and the receiver is formed for differentiating the time length of such sequences.

5. Sending and receiving facility according to claim 4, wherein the installation wire forms a single-wire wire connection.

6. Sender, that is configured as house installation device, for a sending and receiving facility according to claim 4 or 5, said sender being formed for the connection of at least a neutral conductor and a phase conductor of the wiring of the house installation comprising a neutral conductor, a phase conductor and a protective conductor and for the connection of the additional wire connection and further for emitting alternating voltage to the wire connection, wherein for binary coding of the data exclusively either positive or negative half-waves of the alternating voltage are used and the sender is formed for emitting such a half-wave for the one binary value and for suppressing such a half-wave for the other binary value in addition to the sending of uncoded half-wave sequences of different time length.

7. Receiver, that is configured as house installation device, for a sending and receiving facility according to claim 4 or 5, said receiver being formed for the connection of at least a neutral conductor and a phase conductor of the wiring of the house installation comprising a neutral conductor, a phase conductor and a protective conductor and for the connection of the additional wire connection and further for receiving alternating voltage from the wire connection, said receiver being formed for receiving binary values 1 and 0, respectively, of data bits, wherein for binary coding of the data exclusively either positive or negative half-waves of the alternating voltage are used, said binary values being emitted under emission of such a half-wave for the one binary value and under suppression of such a half-wave for the other binary value, respectively, and wherein the receiver is in addition formed for differentiating the time length of uncoded half-wave sequences which are sent by the sender.

8. Use of senders and receivers, respectively, according to claim 6 and 7, respectively, in an electric house installation.

9. Electric house installation for buildings with senders and receivers according to claim 6 or 7, respectively.

10. Building with an electric house installation according to claim 9.

## Revendications

1. Procédé de transmission de données codées entre au moins deux appareils (1 à 7) d'installation privée par un moyen (9) de communication les reliant, les données étant constituées sous la forme de demi ondes d'une tension alternative, le moyen (9) de communication étant une liaison filaire qui est prévue en outre pour le câblage de l'installation privée avec un conducteur neutre, un conducteur de phase et un conducteur de protection, dans lequel pour le codage binaire des données, on utilise exclusivement soit des demi ondes positives, soit des demi ondes négatives et l'une des valeurs binaires est transmise respectivement par passage de la demi onde et l'autre valeur binaire respectivement par blocage de la demi onde et en ce qu'au moins une partie des appareils (4 à 7) est conformée en outre pour l'émission et la réception de séquences de demi ondes non codées et en ce que ces séquences de demi ondes sont distinguées dans l'appareil récepteur sur la base de leur durée.

2. Procédé suivant la revendication 1, **caractérisé en ce que** la liaison filaire est une liaison filaire à un seul brin.

3. Procédé suivant l'une des revendications 1 ou 2, **caractérisé en ce que** les appareils (1 à 7) d'émission et de réception sont constituées de séquences de bits de données rassemblées en des télégrammes de données.

4. Installation d'émission et de réception, comprenant une installation privée ayant au moins un émetteur (1 à 4), formé d'un appareil d'installation privée et au moins un récepteur (5 à 7) formé d'un appareil d'installation privée et un moyen (9) de communication les reliant, dans laquelle l'émetteur est conformé pour l'émission de données codées dans lesquelles les données sont formées de demi ondes d'une tension alternative, et le récepteur est conformé pour la réception et pour le décodage de données codées de ce genre, l'émetteur et le récepteur étant conformés pour l'émission ou pour la réception de demi ondes de tension, le moyen de communication étant un fil d'installation en plus du câblage de l'installation privée avec un conducteur neutre, un conducteur de phase et un conducteur de protection, dans laquelle, pour le codage binaire des données, il est utilisé exclusivement des demi ondes positives ou négatives de la tension alternative et l'émetteur est conformé pour l'émission d'une demi onde de ce genre pour l'une des valeurs binaires ou pour la suppression d'une demi onde de ce genre pour l'autre valeur binaire et en ce que l'émetteur est conformé supplémentairement pour l'émission de séquences de demi ondes non codées de durée différente et l'émetteur pour distinguer la durée de séquences de ce genre.

5. Installation d'émission et de réception suivant la revendication 4, **caractérisée en ce que** le fil d'installation forme un conducteur (9) à un seul brin.

6. Emetteur qui est conformé en appareil d'installation privée pour une installation d'émission et de réception suivant la revendication 4 ou 5, l'émetteur étant conformé pour le raccordement d'au moins un conducteur neutre et d'un conducteur de phase du câblage de l'installation privée comprenant un conducteur neutre, un conducteur de phase et un conducteur de protection et pour le raccordement de la liaison filaire supplémentaire et en outre pour l'envoi d'une tension alternative à la liaison filaire, dans lequel, pour le codage binaire des données, il est fait usage exclusivement soit de demi ondes positives, soit de demi ondes négatives de la tension alternative, et l'émetteur est conformé pour l'envoi d'une demi onde de ce genre pour l'une des valeurs binaires ou pour la suppression d'une demi onde de ce genre pour l'autre valeur binaire en plus de l'émission de séquences de demi ondes non codées de durée différente.

7. Récepteur conformé en appareil d'installation privée pour une installation d'émission et de réception suivant la revendication 4 ou 5, dans lequel le récepteur est conformé pour le raccordement d'au moins un conducteur neutre et un conducteur de phase du câblage de l'installation privée comprenant un conducteur neutre, un conducteur de phase et un conducteur de protection et pour le raccordement de la liaison filaire supplémentaire, et en outre pour la réception de tension alternative, le récepteur étant conformé pour la réception de valeurs binaires 1 ou 0 de bits de données, dans lequel, pour le codage binaire des données, il est fait usage exclusivement soit de demi ondes positives, soit de demi ondes négatives de la tension alternative, les valeurs binaires étant émises en envoyant une demi onde de ce genre pour l'une des valeurs binaires ou en supprimant une demi onde de ce genre pour l'autre valeur binaire et en ce que le récepteur est conformé en outre pour distinguer la durée de séquence de demi ondes non codées émises par l'émetteur.

8. Utilisation d'émetteurs ou de récepteurs suivant la revendication 6 ou 7, dans une installation privée électrique.

9. Installation privée électrique pour des bâtiments ayant des émetteurs et des récepteurs suivant la revendication 6 ou suivant la revendication 7.

10. Bâtiment ayant une installation privée électrique suivant la revendication 9.
